# EUROPEAN PATENT APPLICATION

(11) **EP 1 959 645 A1**
(43) Date of publication of application: **20.08.2008**
(21) Application number: 07300795.7
(22) Date of filing: 16.02.2007
(51) Int. Cl.: H04L 29/12, H04L 29/06

(54) **Method for NAT traversal in a P2P-SIP network**

(71) Applicant: Alcatel Lucent, 75008 Paris (FR)
(72) Inventor: Schwan, Nico, 70190 Stuttgart (DE); Strauss, Thomas, 73734 Esslingen (DE); Tomsu, Marco, 71254 Ditzingen (DE)
(74) Representative: Brose, Gerhard

(57) **Abstract**

The invention concerns a communication system comprising a user agent (tim) and a network address translation helper function (NHFt), the network address translation helper function comprising a directory for advertising user agents (alice), the network address translation helper function comprising furthermore a signaling protocol unaware, stateless transport layer relay for forwarding packets, where the user agent (tim) comprising keeping means to maintain the connection between the user agent (tim) and the network address translation helper function (NHFt). The invention concerns also a method for inviting a user agent comprising the steps of advertising the user agent (alice) at a network address translation helper function (NHFt) of an other user agent (tim) that maintains a connection path between the network address translation function (NHFt) and itself; Inviting the other user (tim) agent by directing the signaling flow comprising the invitation messages to the network address translation helper function (NHFt) without invoking further signaling elements; and forwarding the signaling flow directly on the maintained connection path to the other user agent (tim) without invoking further signaling elements.

## Description

The invention relates to a communication system comprising peer-to-peer user agents, a user agent, a network address translation helper function, and a method for inviting a user agent.

The classical Internet Protocol Multi Media System (IMS) is a complex system. New peer-to-peer (P2P) voice over Internet Protocol applications are of less complexity. Peer-to-peer approaches lead to lower CAPEX/OPEX and are taken into account by telecommunication operators for saving infrastructure. New revolutionary voice and multimedia over IP solutions are emerging, where the signaling and media paths between two user clients go peer-to-peer and involve as little additional infrastructure as possible. In Internet like environments the clients are mostly behind network address translators (NAT), firewalls, or proxies, inside a private realm, i.e. separated administrative domains with their own address spaces. Usually relays inside a public domain are required for signaling (and media) to establish a connection.

Clients of P2P networks that are behind a NAT need a contact point with a public address that relays signaling traffic from and towards the client.

Therefore there exists a server-based trapezoid signaling. Several techniques for detecting and crossing NAT/firewalls/proxies are well known and currently under standardization at Internet Engineering Task Force (IETF). In traditional session initialization protocol (SIP), the client usually communicates with its outbound proxy to overcome NATs. This proxy is SIP aware and supports NAT traversal mechanisms, e.g. by implementing the IETF protocol suite called Interactive Connectivity Establishment (ICE) comprising (Simple traversal of UDP over NATs (STUN) Traversal Using Relay NAT (TURN) for media paths, and SIP outbound.

Several applications use client/server based protocols that allow NAT traversal, e.g. by using Extensible Messaging and Presence Protocol (XMPP).

Another approach to overcome NAT traversal issues is routing the signaling messages through an overlay network. Therefore the clients can request one or more other peers of the overlay that is suitable to forward messages to the destination.

There is no procedure known to establish a logical direct P2P link for signaling traffic without intermediate signaling elements. For all known solutions one or several protocol-aware intelligent signaling helper nodes are required in the public network. These nodes need to be aware of the signaling protocol and need to analyze or even change the message payload.

It is a target of the proposed method to avoid additional intermediate protocol-aware signaling instances like a super-peer or SIP server in the public network. In any case, clients of P2P networks that are behind a NAT need a contact point with a public address that relays signaling traffic from and towards the client.

The problem is solved by a communication system comprising a user agent and a network address translation helper function, where the network address translation helper function comprising a directory for advertising user agents, and where the network address translation helper function comprising furthermore a signaling protocol unaware, stateless transport layer relay for forwarding packets. The user agent comprising keeping means to maintain the connection between the user agent and the network address translation helper function.

That means that a user agent comprises keeping means to maintain a connection between a network address translation helper function and discovery means for retrieving public addresses from the network address translation helper function and receiving means for receiving session initialization protocol messages from the network address translation helper function.

The network address translation helper function comprises a directory for advertising user agents, and the network address translation helper function comprises a signaling protocol unaware, stateless transport layer relay for forwarding packets.

The problem is solved inter alia by a method for inviting a user agent comprising the steps of: advertising the user agent at a network address translation helper function of an other user agent that maintains a connection path between the network address translation function and itself; inviting the other user agent by directing the signaling flow comprising the invitation messages to the network address translation helper function without invoking further signaling elements; and forwarding the signaling flow in advance of the media flow directly on the maintained connection path to the other user agent without invoking further signaling elements.

The invention provides an alternative to Interactive Connectivity Establishment (ICE), which is the current methodology for Network Address Translator (NAT) Traversal for offer/answer protocols according to draft-ietf-mmusic-ice-13.

The basic idea is to miss-use protocol messages to establish a logical direct peer-to-peer link for signaling and media between two clients in the following called user agents via relays, which are herein denominated as NAT traversal helper function.

Obviously is the absence of any mediating proxy or server function like the call session control function (CSCF). Although using session initialization protocol (SIP), the solution does not rely on other signaling protocol aware network elements. Instead, a publicly available transport layer relay, which is unaware of the signaling protocol is used to route the message between the two clients.

The solution has in advance the advantage that it works for all known cases of clients inside a private Intranet with public Internet access; in contrast ICE does not work in any case. A transparent logical direct P2P link for signaling traffic without intermediate signaling elements is established. The relays are stateless and service unaware, hence simple and can be realized at low cost, and can in advance be easily integrated in router or similar network devices. The signaling message flow could be established completely standard compliant and NAT unaware.

The invention is explained using the following figures, where
Fig. 1 shows a communication system according to prior art where two user agents communicate using a mediating network element
Fig. 2 shows a patch according to prior art that enables the communication functionality when NATs are introduced
Fig. 3 shows the communication system according to the invention
Fig. 4 shows the method according to the invention

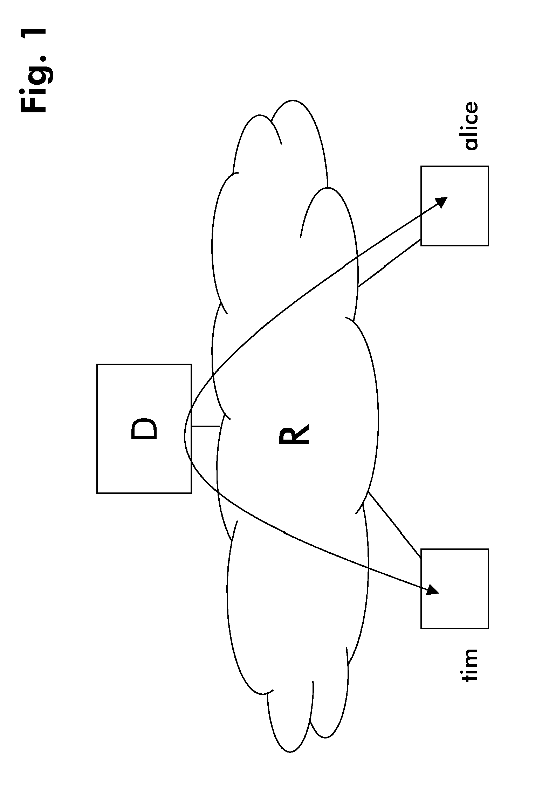

Fig. 1 shows two SIP user agents tim and alice that are known inside a public realm R like the Internet. The public realm has a network entity that provides a directory functionality D that advertises the user agents in the realm, like the CSCFs in IMS. If one of the user agents tim or alice intends to initialize a session for communication, a initializing user agent tim has to lookup an other user agent alice, that is intended to contact. Therefore the initializing user agent tim looks up the address of the other user agent alice using the directory functionality D and establishes usually by signaling a session initialization via the directory functionality D along the shown arrow.

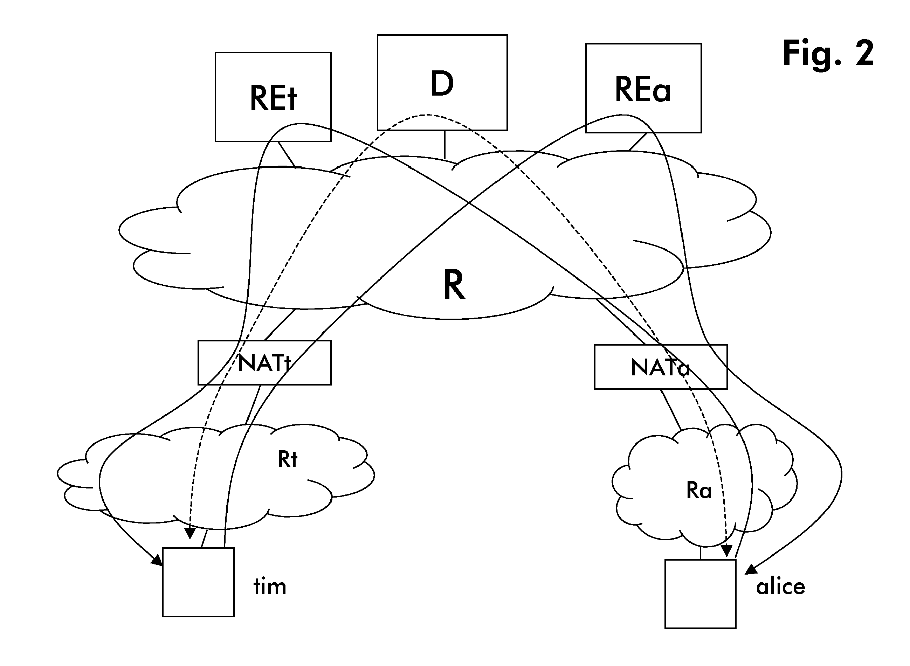

This becomes more complex in the case when a user agent is located inside a private realm hidden by a NAT as shown in Fig. 2. There each user agent alice and tim are located in a private realm Ra and Rt, respectively, that is connected via the NATs NATα and NARb, respectively, with the public realm R. The NAT hides the private address of a user agent and provides a valid address in the address space of the public realm R inclusive address translation. This address translation functionality can be only initialized by the user agent inside a private realm. That means from outside a private realm a translation function could not be initialized. Due to this fact relays REt and REa are introduced that provide a stable contact point in the address space of the public realm R. Therefore a user agent initializes an address translation and provides its address in the address space of the public realm R to an directory functionality D. The user agent maintains its address in order to validate the directory entry advertising the user agent and in order to keep consistency, i.e. to be reachable under the advertised address. When a initializing user agent tim intends to contact another user agent alice, the initializing user agent tim requests the connection from the directory functionality D. The directory functionality identifies the public address of the other user agent alice in the address space of the public realm, and forwards the initialization request. Vice versa the directory functionality D forwards the replies originated by the other user agent alice in the same manner to the initializing user agent tim. In advance a streamed media connection is handled out. The streamed media connection is established via relays REa an REt and not via the directory functionality D in order to avoid bottle necks. The signaling flow is illustrated as a double arrow dashed line in the figure and the media stream flows are illustrated by arrowed solid lines in the figure.

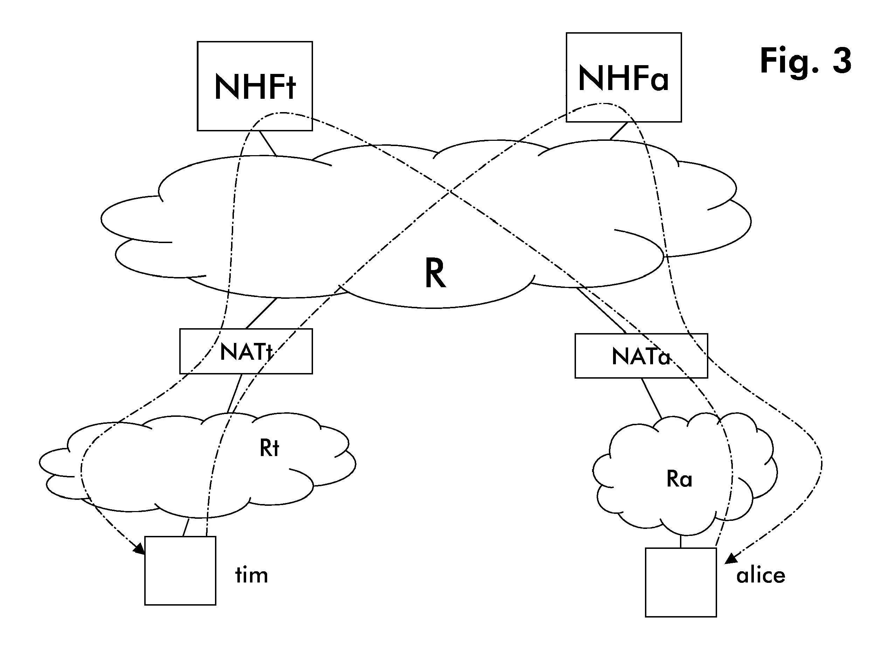

Fig. 3 illustrates the invention. To get rid of the complex infra structure each user agent is realized as a peer with respect to the well known peer to peer principle as described in the dictionary entry retrievable under http://en.wikipedia.org/wiki/Peer-to-peer. It is necessary for this peer, when located inside a private realm behind a NAT, to become visible. Therefore a contact point inside the public realm R must be provided, i.e. an address in the address space of the public realm. Therefore each peer needs a NAT helper function inside the public realm that represents the peer's public address and that provides a contact point inside the public realm R.

The figure shows the solution described above. The user agents tim and alice , i.e. peers, are located inside their private respective realms Rt and Rs. The private realms' address spaces are translated by the NATs NATt and NATa into the public address space of the public realm R. A user agent, tim say, maintains a connection via or through a hiding NAT NATt with the user agent's NAT helper function NHFt. The NAT helper function provides a contact address for the user agent tim by forwarding packets to the user agent tim. In advance the NAT helper function shares a directory, e.g. realized as a distributed hashing table, where the contact point of the user agent is entered and advertised. Similarly and in the shown scenario symmetrically the other user agent alice has a NAT helper function providing similar functionality for the other user agent alice.

The preferred network elements are described implementing the mechanism to establish a logical direct peer-to-peer link for signaling and other data between two SIP agents. Note that the network elements need not to be signaling protocol aware. Instead, a publicly available transport layer relay, which is unaware of the signaling protocol is used to route the message between two SIP agents. Thus on the application layer this solution is logically still peer-to-peer.

The transport layer relay is signaling protocol unaware and stateless. It forwards on Internet Protocol (IP) packet level similar to a router (or IP chains software). It accepts incoming data packets from unknown sources and forwards them to one destination. This results in a n-1 connection scheme.

The respective SIP message content is adapted, so that a standard compliant SIP stack transport layer routes the messages accordingly to the invention.

The peer-to-peer connection between two clients demands a different message routing than the traditional SIP routing since there are no proxies involved that deal with NAT traversal. The method described in the following can be used to establish a peer-to-peer connection between those clients:
SIP user agent "tim" at 149.204.61.29 on port 5062
SIP user agent "alice" at 149.204.61.93 on port 5062
NAT helper function "NHFt" at address 149.204.228.154 on port 5510
NAT helper function "NHFα" at address 149.204.228.154 on port 5520

Fig. 3 illustrates the involved logical elements, where the NAT Helper Functions (NHF) NHFα and NHFb are characterized in that they have at least one global routable public, e.g. Internet, address. Prior to the communication between the clients both have to assign a public Internet address as contact point for incoming traffic. If they cannot provide one on their own, they contact the NHF with a Client-Relay protocol. This NHF configuration controlled by the client suites the P2P model. Alternatively there can also be an interface at the NHF that allows configuration by other operator infrastructure nodes, so the NHF can be controlled by a network server function. For both options the NHF assigns a public Internet address and port number exclusively to the client. The client then registers this public contact point in a registry. This registry can either be a central server or an overlay network. The NHF forwards incoming traffic at the assigned contact point towards the client, whereas the source of this traffic is irrelevant. To keep the NAT between the NHF and the SIP user agent open, the user agent periodically sends a keep-alive message to the NHF. The NHF uses this connection to forward the incoming traffic, thus all known NAT types are supported by this principle. In addition this connection can be tunneled to support firewall traversal, e.g. via hyper text transfer protocol.

During a communication process the first SIP user agent tim queries the registry for another SIP user agent alice and receives the public contact point. It then sends the SIP request to this public contact point where it is forwarded towards the SIP user agent alice.

As the NHF is stateless and service unaware the SIP response cannot be sent back on the same way as the request. Stateless means that the NHF does not keep states on SIP level. The TURN-like bindings however have to be stored and managed by the NHF. The SIP user agent alice thus sends the response to the public contact point of the first SIP user agent tim, which is determined from the SIP request. The response then is forwarded to the SIP user agent tim. This cross-over message routing works for all types of NATs.

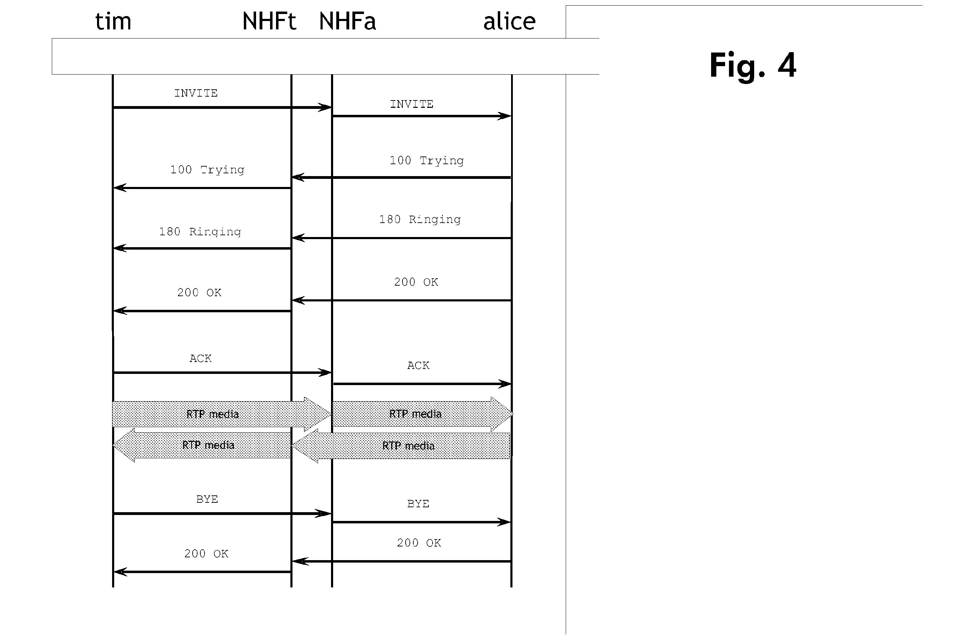

The message sequence chart of Fig. 4 shows the scenario that is used for the call setup between the two SIP user agents tim and alice illustrated in the previous figure. The SIP header fields are used to achieve the cross-over routing.

The initial invite message INVITE from SIP user agent tim to NHF NHFa that is forwarded to SIP user agent alice contains
INVITE sip:alice@149.204.228.154:5520 SIP/2.0
Via: SIP/2.0/UDP 149.204.228.154:5510;branch=z9hg4bk19327
Contact: <sip:tim@149.204.228.154:5510>

SIP user agent alice replies with a trying message 100 Trying via the NHF NHFt to SIP user agent tim, where the message contains
SIP/2.0/100 Trying
Via: SIP/2.0/UDP 149.204.228.154:5510;branch=z9hg4bk19327

And delivers on the same path a ringing message 180 Ringing
SIP/2.0/ 180 Ringing
Via: SIP/2.0/UDP 149.204.228.154:5510;branch=z9hg4bk19327

Followed by an ok message 200 OK
SIP/2.0/ 200 OK
Via: SIP/2.0/UDP 149.204.228.154:5510;branch=z9hg4bk19327
Contact: <sipaim@149.204.228.154:5520>

The user agent tim answers with an acknowledge ACK
ACK sip:alice@149.204.228.154:5520 SIP/2.0
Via: SIP/2.0/UDP 149.204.228.154:5510;branch=z9hg4bk19327

After this initialization each the SIP user agents are aware of each other and can exchange media, depicted by the arrows indication RTP media streams.

A session is terminated by a bye message BYE
BYE sip:alice@149.204.228.145:5520 SIP/2.0
Via: SIP/2.0/UDP 149.204.228.145:5510;branch=z9hg4bk19327

That is accepted on the usual relay path ...
SIP/2.0/ 200 OK
Via: SIP/2.0/UDP 149.204.228.145:5510;branch=z9hg4bk19327

The important header fields to carry out the invention are set as defined below:
Request-URI: Public contact point of SIP user agent alice as published in the registry
Via: Public contact point of the SIP user agent tim for the SIP request
Contact: Public contact point of the SIP user agent tim for the SIP request and alice for the SIP request

In addition the setting for the sent-by values of the SIP stacks of the SIP user agents alice and tim are set to the respective public contact point. This standard SIP compliant message flow is peer-to-peer from an application point of view but routed cross-over on the transport layer.

Advantageously an NHF implements spit prevention by filtering on IP level. The NHF also could limitate the incoming signaling message rate for the client. In advance the NHF could be a candidate for a legal intercept point in P2P traffic.

## Claims

1. A communication system comprising a user agent (tim) and a network address translation helper function (NHFt), the network address translation helper function (NHFt) comprising a directory for advertising user agents (alice), the network address translation helper function (NHFt) comprising furthermore a signaling protocol unaware, stateless transport layer relay for forwarding packets, where the user agent (tim) comprising keeping means to maintain the connection between the user agent (tim) and the network address translation helper function (NHFt).

2. A user agent that (tim) comprises keeping means to maintain a connection between a network address translation helper function (NHFt) and discovery means for retrieving public addresses from the network address translation helper function (NHFt) and receiving means for receiving session initialization protocol messages from the network address translation helper function (NHFt).

3. A network address translation helper function (NHFt) comprising a directory for advertising user agents (alice), and the network address translation helper function (NHFt) comprising a signaling protocol unaware, stateless transport layer relay for forwarding packets.

4. A method for inviting a user agent (alice) comprising the steps of:
- Advertising the user agent at a network address translation helper function (NHFt) of an other user agent (tim) that maintains a connection path between the network address translation function (NHFt) and itself (tim);
- Inviting the other user agent (alice) by directing the signaling flow comprising the invitation messages to a network address translation helper function (NHFa) without invoking further signaling elements; and
- Forwarding the signaling flow directly on a connection path that is maintained by the other user agent (alice) to the other user agent (alice) without invoking further signaling elements.

5. The method for inviting a user agent (alice) according to claim 4 **characterized by** comprising the further step of: replying by the user agent (alice) on the inviting via the a network address translation helper function (NHFt) to the other user agent (tim).
